# EUROPEAN PATENT SPECIFICATION

(11) **EP 3 320 142 B1**
(45) Date of publication and mention of the grant of the patent: **08.09.2021**
(21) Application number: 16820925.2
(22) Date of filing: 05.07.2016
(51) Int. Cl.: D21H 21/14, D21F 1/80, D21H 17/33, B29C 51/00, B29C 70/12, B29C 70/40, D21H 13/10

(54) **FORMING AND DEWATERING OF A COMPOSITE USING A DOUBLE WIRE PRESS**
HERSTELLUNG UND ENTWÄSSERUNG EINES VERBUNDSTOFFES MIT EINER DOPPELDRAHTPRESSE
FORMATION ET ÉGOUTTAGE D'UN COMPOSITE EN UTILISANT UNE PRESSE À DOUBLE TOILE

(30) Priority: 06.07.2015 SE 1550980
(43) Date of publication of application: 16.05.2018
(73) Proprietor: Stora Enso Oyj, 00101 Helsinki (FI)
(72) Inventor: PFITZNER, Thomas, 76297 Stutensee-Blankenloch (DE); HOFF, Johan, 314 34 Hyltebruk (SE); BERGSTRÖM, Roger, 314 31 Hyltebruk (SE); JOHANSSON, Conny, 312 32 Laholm (SE); TÖRNBLOM, Maria, 302 42 Halmstad (SE); BENGTSSON, Anders, 314 34 Hyltebruk (SE)
(74) Representative: Steinrud, Henrik
(86) International application number: PCT/IB2016/054013
(87) International publication number: WO 2017/006241

(56) References cited:
- EP-A2- 1 405 949
- EP-A2- 1 405 949
- EP-A2- 1 803 850
- EP-A2- 1 803 850
- WO-A1-01/70158
- WO-A1-2009/008822
- WO-A1-2009/145697
- WO-A1-2009/145697
- WO-A1-2011/087438
- WO-A1-2011/087438
- WO-A1-2015/052382
- WO-A1-2015/052382
- WO-A2-00/75427
- WO-A2-00/75427
- CN-A- 103 572 644
- CN-A- 103 572 644
- US-A- 4 769 274
- US-A- 5 108 545
- US-A- 5 393 379
- US-A- 6 136 153
- US-A- 6 136 153
- US-A1- 2007 137 810
- US-A1- 2007 137 810
- US-B1- 6 261 414

## Description

### Technical field

The present invention relates to a method for forming and dewatering of a composite sheet, in a double wire press.

More particularly, the present disclosure relates to the wet web formation of a composite in sheet form comprising a mixture of fibers and at least one polymer.

### Background

In recent years the possibility of forming composites with fibers, such as natural fibers or cellulosic fibers, and a polymer, such as a thermoplastic material, has become increasingly interesting. There are numerous applications for such composites, since they can be very light, durable, and if the thermoplastic material is for instance polylactic acid (PLA) they can even be biodegradable. The composites may for instance be formed through extrusion of a thermoplastic material and a fiber material. However, in some applications it is desirable to have a composite in a sheet or roll configuration, and then extrusion is not the best option. Instead, composite papers, or even multiply papers, have been made by using the technology of conventional paper making machines.

In US 8,795,471 B2 a composite intermediate, comprising a mixture of natural fibers, plastic particles and an agent that improves the compatibility of the fibers and plastic material, is described. A method for forming the composite intermediate through wet web formation as an even layer in a web forming section of a conventional paper making machine is also described. The fibrous content of the stock mixture is relatively low, in the range of 2.2 to 2.3 % before dilution to head-box consistency. The intermediate is then, after the web formation, and drying, crushed into smaller granules and used for injection molding. This method usually comprises a compounding step.

In WO2013/169204 another composite article is described, in the form of a sheet, comprising cellulose fibers and a thermoplastic matrix, where the composite article is formed at traditional papermaking consistency, i.e. through wet web formation, with subsequent pressing and drying of the web, and heating to melt the thermoplastic material. In the method described therein the fiber shaped polymer and the pulp fibers, are both provided as aqueous suspensions of relatively high consistency, mixed at this concentration and later diluted to 0,15% or 0,7-1,5%, before the forming of a paperlike composite article. The composite article may comprise from 5 to 70 weight-% of the thermoplastic matrix. The formed sheet has a relatively low grammage or basis weight.

In WO2014/174410 a method for manufacturing a multiply web composite is disclosed, where the multiply web comprises a layer comprising a mixture of natural fibers and plastic particles interposed between two layers comprising natural fibers. The multilayer composite is formed in a conventional paper making machine, through wet web formation.

The operating costs for the before mentioned processes are relatively high due to complicated machinery and the low forming consistency which requires energy-consuming removal of significant amounts of water, and it is difficult to achieve an efficient production process for sheet composites having a greater basis weight, which is desirable in some applications.

US 6136153 A describes an assembly and a method for producing a non-woven web of fibrous material utilizing the foam process. The assembly comprises one or more wires. A non-woven fibrous web is formed on the wires while the wires are moving in a first direction. The assembly also comprises a former and means for introduction of a foam/fiber slurry into the former first end. The foam/fiber slurry introduction means introduces a foam-fiber slurry having a solids (fiber) consistency of between about 2-25%.

US 4769274 A describes thermoformable mats comprising (a) natural relatively coarse cellulosic fibers, (b) thermoplastic synthetic polymer fibrils, (c) thermoplastic synthetic polymer particles, (d) substantially void-free substantially water-insoluble particulate inorganic material, and (e) particulate void-containing substantially water-insoluble inorganic material. In one example of production of a thermoformable mat, the five components may be dispersed in water. As the aqueous dispersion is brought to a head-box of a Fourdrinier machine, a cationic acrylamide flocculant is added to the dispersion.

WO 2011/087438 A1 describes a method of producing a mouldable material, which comprises mixing pulp and at least one thermoplastic latex to obtain a mixture and pressing the mixture to obtain a mouldable material. Additives, including retention agents, may be added to the mixture. The retention agent may be, for example, a cationic polyacrylamide.

US 4645565 A relates to a material in sheet form used in a process of moulding-stamping or heat-forming involving melting of the thermoplastics resin contained in said material. The material is prepared by the papermaking technique from an aqueous mixture comprising reinforcing fibres, thermoplastic resin, polyolefin pulp, a binding agent and at least one flocculating agent. The aqueous mixture may be prepared by adding successively in order a dispersing agent, reinforcing fibers, polyolefin pulp, thermoplastic resin, a portion of the flocculating agent, binding agent and the remaining flocculating agent.

### Summary

It is an object of the present disclosure, to provide an improved composite product, which eliminates or alleviates at least some of the disadvantages of the prior art fiber and polymer composites.

More specific objects include providing a composite product in the form of a thermo-formable sheet having a relatively high basis weight.

The object is wholly or partially achieved by a composite product and a method for forming said composite product according to the appended independent claims. Embodiments are set forth in the appended dependent claims, and in the following description and drawings.

According to a first aspect, there is provided a composite product and a method for manufacturing said product, said composite product comprising a fibrous material and a polymer material, wherein the composite product is formed as a sheet, by wet web formation and wherein the web is formed from a suspension of said fibrous material and said polymer material, in a double wire press.

By using a double wire press it is possible to achieve a new type of composite product having an increased or higher basis weight, i.e. being thicker, than single sheet composites made through a conventional paper making process.

A composite product having a higher basis weight also has higher caliper and stiffness. This means that the composite product can be used in applications where these characteristics are desirable such as forming large area composite modules. The increased caliper also provides for the possibility to place, into the composite product, either during or after the double wire press process, additional material, such as fiber threads, alumina foil, sensors etc.

The double or twin wire press also provides for a process for forming the composite sheet in a simple and more efficient manner, having a higher grammage range, than through a conventional process. The process equipment is made smaller, i.e. takes up less space than a conventional paper making machine, and is also cheaper than conventional paper making machines, both in terms of investment and operation costs. This could further allow for the production process to be mobile, since the double wire press can be moved from one site to another. In this context, it should be noted that in the present invention a twin wire press (also referred to as a double wire press) is used, not a twin wire former. A twin wire former uses a traditional head-box and is part of a paper making machine, whereas a twin wire press is not part of a paper making machine. The twin wire press comprises a wire section and a press section in the same device.

The composite product may be in the form of a roll or a sheet, i.e. a substantially flat or planar product, depending on the desired use of the end product composite. It is possible to form sheets having a large size of up to 2 to 3 meters wide and up to 5 to 6 meters long or longer.

According to the present invention the fibrous material comprises natural fibers, such as wood-derived fibers, botanical fibers and/or derivatives thereof, spun or regenerated cellulose and/or a mixture thereof. The natural fibers may also be microfibrillated cellulose (MFC), microfibrillated lignocelluloses (MLC) or nanocrystalline cellulose (NCC). The fibrous material may comprise fibers of any suitable length, depending on the desired characteristics of the end product. In one embodiment, the natural fiber is a cellulose or lignocellulose fiber.

According to the present invention, the fibers are modified. In one embodiment, the fibers are chemically modified. In one embodiment, the fibers are chemically modified to improve their compatibility with the polymer material. According to the present invention, the fibers are modified in situ in the furnish. The modification is performed by adding an additive in emulsion form that is precipitated on the fibers by addition of an agent that destabilizes the emulsion. In one embodiment, the additive is a coupling agent. The agent that destabilizes the emulsion may be a polyvalent ion such as Al³⁺ or an ionic polymer such as poly-DADMAC, C-PAM or A-PAM.

According to one embodiment of the first aspect the polymer material is a thermoplastic material, which may be selected from the group comprising polyethylene, polypropylene, polylactic acid, polystyrene, polycarbonate, polyvinyl chloride, acrylonitrile-butadiene-styrene (ABS), ethylene vinyl acetate (EVA), thermoplastic elastomers, polyamides, and/or co-polymers , and/or derivatives, and/or mixtures thereof. The polymer material can be provided in the form of particles, such as particles having an average diameter of less than 1 mm, such as 0.8 mm or 0.5 mm or less than 0.5 mm. The polymer material may also be provided in the form of an emulsion or latex. The polymer material may also be in fiber form. The dry polymer or polymer emulsion may be added directly into the fiber suspension before mixing.

The composite product comprises further at least one additive selected from the group of starch, fillers, surface-active agents, retention agents, dispersing agents, anti-foam agents, coupling agents, stabilizing agents, lubricants, flame retardants, anti-oxidants, UV-stabilizers, and mixtures thereof. The additive is provided in emulsion form. The additive provided in emulsion form can be a coupling agent.

According to one embodiment the head-box consistency, i.e. the total proportion of solids in the suspension when this is brought onto the wires, may be from 2.0 to 10 weight-%, such as from 2.4 to 10 weight-% or from 3 to 10 weight-% or from 4 to 10 weight-% or from 5 to 10 weight-%. Solids include fibrous material, polymer and potentially other components such as additives to the extent the other components such as additives are insoluble in the liquid of the suspension. This consistency is considerably higher than in a conventional paper making process, but made possible by the forming and dewatering in the double wire press. This consistency also allows for a higher basis weight or grammage of the composite end product. The high consistency of the suspension in the head-box in accordance with the present invention means that the energy requirement for feeding and dewatering is significantly less than if a lower consistency would be used.

According to one embodiment the polymer material content of the dry weight of the suspension of said fibrous material and said polymer material may be from 10 to 80 weight-%.

In one embodiment, the composite product is a single sheet or single layer. In one embodiment, the layer is substantially uniform or homogenous in its cross-section.

In one embodiment, the composite product may also be a multiply composite, wherein said web may be formed using a multilayer head-box.

According to one embodiment the composite product may have a dry content of more than 15 weight-%, such as 20 weight-% or 25 weight-% after being pressed in said double wire press. In one embodiment, the outlet dry content from the double wire press is in the range of 30 to 50 weight-%, which is comparable to the dry content after the press section in a conventional paper making process, thus allowing for a much more efficient manufacturing method of the composite product.

The composite product may have a basis weight in the range of from 100 to 10 000 g/m², such as from 100 to 5 000 g/m² or from 1 000 to 10 000 g/m² or from 500 to 5 000 g/m² or from 250 to 5000 g/m² or from 250 to 10 000 g/m² or from 2 000 to 10 000 g/m². The product may be a thermo-formable sheet. This means that a composite product in the form of a thermo-formable sheet, and having a relatively high basis weight or grammage, is provided. This can be advantageous in many different applications where stability and strength of the material is important.

According to a second aspect there is provided a method for manufacturing a composite product comprising a fibrous material and a polymer material, wherein the composite product is formed as a sheet, by wet web formation , wherein said method comprises the steps of mixing said fibrous material and said polymer material and a liquid, such as water, to form a suspension, having a consistency, after optional dilution, when in the head-box, of from 2.0 to 10 weight-%; transporting said suspension to a head-box; forming a web and removing liquid from said web, to form said composite product in a double wire press.

By forming and pressing the web in the double wire press it is possible to form a sheet, or a roll, product, having a higher basis weight, than composites formed in a conventional paper or board making machine.

The mixing can be performed in any type of mixer, for instance in a tank or stand-pipe, but also in special mixers. The mixing may be performed using high shear forces. The mixing may be followed by dilution.

In an alternative embodiment the fibers may be mixed directly with the polymer material in the head-box.

The head-box used in accordance with the present invention may be pressurized and may be equipped with vanes or tubes or with other fixed means for generating turbulence in the head-box. The head-box may be fitted with stirring means inside the head-box or means for introducing air, which may be pressurized, into the head-box to create turbulence. The head-box may be equipped with a pressure gauge. The head-box may be arranged so that the outflow from the head-box is directed into the wire gap or wedge zone of the double wire press. The lip opening of the head-box may be adjustable.

According to one embodiment the head-box may be a multilayer head-box. By using a multilayer head-box it is possible to provide a multilayer or multiply composite product in a very efficient way. Alternatively, a multilayer or multiply composite product can be obtained by the use of more than one head-box. Through the double wire press it is possible to form and dewater the web easily, but yet achieving a composite product having higher basis weight than conventionally laid multiply composite products.

According to one embodiment the method of the second aspect may comprise a further step of pressing said web after the step of forming and pressing said web in the double wire press. This means that if the dry content of the web after the double wire press is too low the web may be further pressed to remove even more water.

According to a third aspect there is provided an apparatus for forming a composite sheet, wherein the composite sheet comprises a fibrous material and a polymer material, and wherein the composite product is formed as a web, in a double wire press. In one embodiment the double wire press is equipped with a pressurized head-box and/or a head-box with stirring means as described above. In one embodiment, vacuum suction boxes or rolls are used for dewatering prior to the press nip or press nips. The press nip or press nips may also be equipped with suction rolls for more efficient dewatering.

This apparatus provides for a way of forming a fiber-polymer composite product having an increased basis weight compared to composite papers laid in conventional paper making machines. The apparatus is also smaller, i.e. takes up less space than a conventional paper making machine, and more energy efficient due to less water handling.

The apparatus may further comprise a multi-layer head-box and/or multiple head-boxes.

According to a fourth aspect there is provided a composite product obtainable by the method according to the second aspect. The composite product may for instance be a sheet product which is difficult to obtain through conventional methods for producing a fiber-polymer composite. The basis weight of this sheet product may further be relatively high, which is even more difficult to obtain in a conventional method for forming sheet composites.

The composite product according to the present invention is in the form of a sheet and can be used in thermoforming, i.e. in the manufacture of end products formed by vacuum molding, pressure molding or compression molding using methods known in the art.

### Brief Description of the Drawings

Embodiments of the present solution will now be described, by way of example, with reference to the accompanying schematic drawing.

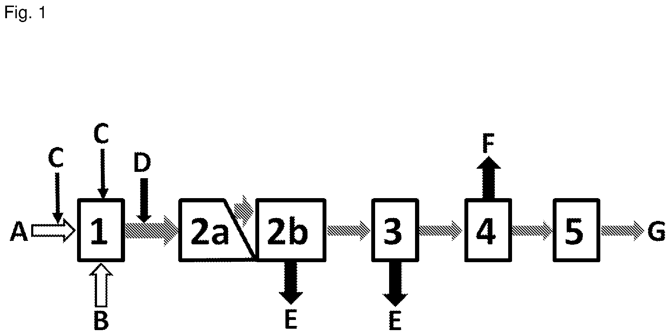

Fig. 1 is a schematic perspective view of an apparatus arrangement for manufacture of a composite sheet:

| **Legend** | **Materials stream** |
|---|---|
| **A** | Fiber suspension |
| **B** | Polymer |
| **C** | Additives |
| **D** | Dilution water (optional) |
| **E** | Excess water |
| **F** | Humid air |
| **G** | Finished composite product |

| **Legend** | **Process equipment** |
|---|---|
| **1** | Mixer |
| **2a** | Head-box |
| **2b** | Pressnip(s) |
| **3** | Additional press (optional) |
| **4** | Dryer |
| **5** | Heat press |

### Description of Embodiments

Fig. 1 illustrates an arrangement for forming the composite web and subsequent composite product in the form of a sheet or roll. In the arrangement a fiber suspension (A) and polymer (B), wherein the polymer is in the form of a dry powder or fibers or as an emulsion or a suspension, and additives (C), are mixed to form a liquid suspension, for instance in a tank or mixer (1), optionally followed by dilution (D). The suspension, or intermediate or mixture suspension, is then brought to a head-box (2a) which is part of a double wire press. From the head-box the mixture suspension is subsequently brought onto the wires of the press, where a web or sheet is then directly formed and simultaneously dewatered to form the composite product.

According to one embodiment this product may be further pressed in a subsequent additional press operation (3) to remove excess water before it is dried in a dryer (4), forming the non-consolidated fiber polymer composite as a sheet or roll. The step of removing liquid from the web may thus also include a further pressing step, or if the web has a desired consistency after passing through the double wire press, it may be directly transferred to a dryer for further removal of liquid from the web to form a substantially dry composite product. The heating or drying, i.e. the further increase of the dry content, may be performed by any conventional means, such as by heating against a hot surface (hot rolls or condebelt), by applying hot gas, by applying microwaves, infrared radiation or a mixture of different heating techniques, known to the skilled person. After drying, the composite is preferably taken through a heat-pressing step of temperatures above the melting point of the polymer and pressures above 200 kPa where the polymer material melts and is pressed into the voids between the fibers to form a matrix and the resulting product is consolidated and essentially homogenous and does not absorb any substantial amounts of water. The product is essentially impermeable to water. In one embodiment this consolidation can take place simultaneously with the thermo-forming operation. The double wire press (2a and 2b), may be of a conventional type known to the skilled person. It may also be modified to achieve the composite sheet product according to the present invention. The speed of the double wire press can be adjusted as required to obtain the desired basis weight of the product. The speed is typically less than 60 m/min, considerably lower than in a typical papermaking process.

The mixing can be performed in any type of mixer, for instance in a tank (1) or stand-pipe, but also in special mixers.

The composite product is thus simultaneously formed and dewatered in the double wire press (2a and 2b). The new type of composite product formed has an increased or higher basis weight, i.e. being thicker, than sheet-like composites made through a conventional paper making process, comprising a wire section and subsequent pressing and drying steps. This means that the process takes up less space than a conventional paper making machine, and also that the equipment may be cheaper than conventional paper making machines both in investment and operational cost.

The composite product may be in the form of a roll or a sheet, i.e. a substantially flat or plane product, depending on the desired use of the end product composite. It is possible to form sheets having a large size of up to 2 to 3 meters wide and up to 5 or 6 meters long.

The fibrous material is selected from the group comprising natural fibers, such as wood-derived fibers including spun and regenerated cellulose, botanical fibers and/or derivatives thereof, and/or a mixture thereof. The natural fibers may also be a nanofibrillated polysaccharide such as for instance microfibrillated cellulose (MFC), microfibrillated lignocelluloses (MLC) or nanocrystalline cellulose (NCC). The fibrous material may comprise fibers of any suitable length, depending on the desired characteristics of the end product. It may also comprise fines material or micro- or nanofibrillar or crystalline material. This fibrous material may include nanocellulose spun with either traditional spinning techniques or with electrostatic spinning. The fibers can also be formed by other means using e.g. ionic liquids or membrane techniques (precipitation or coagulation of dissolved cellulose) and thus either a form of regenerated cellulose or liberated fibrils obtained by selective dissolving liquids. In these cases, the material is preferably a polysaccharide but not limited to solely a polysaccharide. Also microcrystalline cellulose, whiskers and nanocellulose crystals could be used. The said component can also be a mixture of the presented materials. The microfibrillated cellulose (MFC) is also known as nanocellulose. It is a material typically made from wood cellulose fibers, both from hardwood or softwood fibers. It can also be made from microbial sources, agricultural fibers such as wheat straw pulp, bamboo or other non-wood fiber sources. In microfibrillated cellulose the individual microfibrils have been partly or totally detached from each other. A microfibrillated cellulose fibril is normally very thin (~20 nm) and the length is often between 100 nm to 10 µm. However, the microfibrils may also be longer, for example between 10-200 µm, but lengths even 2000 µm can be found due to wide length distribution.

MFC or nanocellulose or nanocrystalline cellulose can be made with different means such as mechanically or chemically or enzymatically or by using bacteria or by combining e.g. chemical and mechanical treatment steps.

Different types of spinning and precipitation processes can also be used. In this case, the starting material for making a nanofiber or MFC can be a polysaccharide.

The polymer material is a thermoplastic material, which may be selected from the group comprising polyethylene, polypropylene, polylactic acid, polystyrene, polycarbonate, polyvinyl chloride, acrylonitrile-butadiene-styrene (ABS), ethylene vinyl acetate (EVA), thermoplastic elastomers, polyamides, and/or co-polymers, and/or derivatives, and/or mixtures thereof.

The thermoplastics materials must be processable in later production steps at a temperature below 250°C, preferably below 220°C.

In the suspension of fiber and polymer, it is further possible to add other additives, such as starch, fillers, surface-active agents, retention agents, dispersing agents, anti-foam agents, coupling agents, stabilizing agents, lubricants, flame retardants, anti-oxidants, UV-stabilizers, and mixtures thereof.

Preferably a compatibility agent (also referred to as coupling agent) is provided or added, such as for instance a maleic anhydride grafted polymer or similar substances, in order to improve the adhesion between fibers and polymer matrix in the composite.

The head-box consistency, i.e. the proportion of solids in the suspension may be from 2.0 to 10 weight-% or from 2.4 to 10 weight-% such as from 3 to 10 weight-% or from 4 to 10 weight-%. Solids include fibrous material, polymer and potentially other components such as additives to the extent the other components such as additives are insoluble in the liquid of the suspension. The polymer material content of the dry weight of the suspension of said fibrous material and said polymer material may be from 10 to 80 weight-% such as from 30 to 60 weight%. Thus the fiber content of the dry weight of the suspension of said fibrous material and said polymer material may be from 20 to 90 weight-%.

According to one embodiment the composite product may have a consistency of more than 15 weight-%, such as 20 weight-% or 25 weight-% after being pressed in said double wire press.

The composite product may have a basis weight in the range of from 100 to 10 000 g/m², such as from 100 to 5 000 g/m² or from 1 000 to 10 000 g/m² or from 500 to 5 000 g/m² or from 250 to 5000 g/m² or from 250 to 10 000 g/m² or from 2 000 to 10 000 g/m².

According to one embodiment the head-box (2a) may be a multilayer head-box. By using a multilayer head-box it is possible to provide a multilayer or multiply composite product in a very efficient way. Through the double wire press (2) it would then be possible to form and dewater the web easily, but yet achieving a composite product having higher basis weight than conventionally laid multiply papers. After drying and heating, each layer of the multiply composite product is consolidated and essentially homogenous and does not absorb any substantial amounts of water. The multiply composite product is essentially impermeable to water.

### Examples

Composite sheets were formed on a modified double wire press Multibelt M1500 from Hedemora Verkstäder, Hedemora Sweden. The press was equipped with a closed, pressurized headbox attached on a crossbeam in close proximity to the wire gap. The headbox was designed with an adjustable lip opening which during the trials was set to 3 mm. To save material in the trials, the headbox was considerably narrower than the wire. The furnish was prepared in a 40 m³ mixing tank equipped with a side fitted mixing propeller operating at 220 rpm. The furnish was withdrawn from the tank by a centrifugal mixing pump which could also be set to recirculation for additional pre-mixing of the furnish.

For the examples 6.0 m³ of bleached DIP, with a measured consistency of 4.1 %, from the Stora Enso Hylte Mill DIP-line was filled into the mixing tank. 30 I of Aquaseal X 2196 (supplied by Paramelt Veendam B.V., Veendam, The Netherlands) was added and mixed in for ten minutes. Subsequently 50 I of a 0.3% solution of Drewfloc 413NS (Solenis Sweden AB, Göteborg, Sweden) was added and mixed in for ten minutes. After this 220 kg of polypropylen homopolymer (Borealis HG 385 MO) ground into powder form was mixed into the fibre suspension. Finally an additional 2.0 m³ of water was added to the furnish and this mixed for an additional 10 min. The final total consistency of the furnish led to the headbox was measured to be 6.0%.

The press was run at a constant rate of feeding of the furnish but different wire speeds and samples of approximately 40X50 cm were collected. These were pressed at approximately 750 kPa between pieces of press felts in a hand operated veneer press to further increase the dry content. After this they were dried in a heating cabinet at 105 °C overnight. A4 sized pieces were cut out for the grammage determination and for measurement of caliper. To consolidate the composite 12x12 cm pieces were finally cut out and heat pressed at 200 °C and aproximately 730 kPa for 18 min with 5 or 10 min of pre-heating at pressing temperature. Caliper was also measuered on those pieces. The results are presented in the table below:

| | **Wire speed** | **Dry content out of press** | **Grammage** | **Original caliper** | **Caliper after heat press** |
|---|---|---|---|---|---|
| **Sample** | (m/min) | (%) | (g/m²) | (mm) | (mm) |
| **1** | 4.4 | 20 | 2450 | 5.7±0.3 | 2.9±0.2 |
| **2** | 5.4 | n.m. | 1780 | 4.1±0.3 | 2.0±0.05 |
| **3** | 6.1 | n.m. | 1540 | 3.5±0.2 | 1.9±0.05 |
| **4** | 7.8 | n.m | 1440 | 3.3±0.2 | 1.7±0.05 |

In view of the above detailed description of the present invention, other modifications and variations will become apparent to those skilled in the art.

## Claims

1. A method for manufacturing a composite product comprising a fibrous material and a polymer material, wherein the fibrous material comprises natural fibers, wherein the polymer material is a thermoplastic material, and wherein the composite product is a sheet, formed by wet web formation, wherein said method comprises the steps of;
- mixing said fibrous material and said polymer material and a liquid to form a suspension;
- transporting said suspension to a head-box, wherein the consistency of the suspension in the head-box is from 2.0 to 10 weight-%;
- forming a web on wires;
- removing liquid from said web, to form said composite product,
wherein both forming and initial dewatering is accomplished in a double wire press, **characterized in**
**that** the composite product further comprises at least one additive selected from the group of starch, fillers, surface-active agents, retention agents, dispersing agents, anti-foam agents, coupling agents, stabilizing agents, lubricants, flame retardants and mixtures thereof, wherein the at least one additive is provided in emulsion form, and
**that** the emulsion is precipitated on the fibers by addition of an agent that destabilizes the emulsion before said fibrous material is mixed with said polymer material.

2. The method as claimed in claim 1, wherein the composite product consists of a single layer.

3. The method as claimed in claim 1, wherein the composite produced is a multiply product.

4. The method as claimed in any one of claims 1 to 3 wherein said head-box is pressurized.

5. The method as claimed in any one of claims 1 to 4, wherein said head-box is equipped with means for generating turbulence in the head-box, such as vanes or tubes or other fixed means for generating turbulence in the head-box.

6. The method as claimed in any one of claims 1 to 5, wherein said head-box is fitted with stirring means inside the head-box or means for introducing air into the headbox to create turbulence.

7. The method as claimed in any one of claims 1 to 6, wherein the method comprises a further drying step.

8. The method as claimed in any one of claims 1 to 7, wherein the method comprises a further step of pressing and optionally heating said sheet after the step of forming said sheet in the double wire press.

9. The method as claimed in any one of claims 1 to 8, wherein said natural fibers are wood-derived fibers, botanical fibers and/or derivatives thereof, spun or regenerated cellulose, microfibrillated cellulose (MFC), microfibrillated lignocelluloses (MLC), nanocrystalline cellulose (NCC) and/or a mixture thereof.

10. The method as claims in any one of claims 1 to 9, wherein said natural fiber is a cellulose fiber or a lignocellulose fiber.

11. The method as claimed in any one of claims 1 to 10, wherein said thermoplastic material is selected from the group comprising polyethylene, polypropylene, polylactic acid, polystyrene, polycarbonate, polyvinyl chloride, acrylonitrile butadiene styrene, ethylene vinyl acetate, thermoplastic elastomers, and/or derivatives, and/or co-polymers, and/or mixtures thereof.

12. The method as claimed in any one of claims 1 to 11, wherein the polymer material content is from 10 to 80 weight-% of the dry weight of the suspension of said fibrous material and said polymer material.

## Patentansprüche

1. Verfahren zur Herstellung eines Verbundwerkstoffprodukts, umfassend ein Fasermaterial und ein Polymermaterial, wobei das Fasermaterial Naturfasern umfasst, wobei das Polymermaterial ein thermoplastisches Material ist, und wobei das Verbundwerkstoffprodukt eine Papierbahn ist, die durch Nassbahnbildung gebildet wird, wobei das Verfahren die folgenden Schritte umfasst;
- Mischen des Fasermaterials und des Polymermaterials und einer Flüssigkeit zum Bilden einer Suspension;
- Transportieren der Suspension zu einem Stoffauflauf, wobei die Konsistenz der Suspension im Stoffauflauf 2,0 bis 10-Gew.-% beträgt;
- Bilden einer Bahn auf Drähten;
- Entfernen von Flüssigkeit von der Bahn, um das Verbundwerkstoffprodukt zu bilden, wobei sowohl das Bilden als auch das anfängliche Entwässern in einer Doppelsiebpresse durchgeführt wird, **dadurch gekennzeichnet, dass** das Verbundwerkstoffprodukt ferner mindestens ein Additiv umfasst, das aus der Gruppe, bestehend aus Stärke, Füllstoffen, oberflächenaktiven Mitteln, Retentionsmitteln, Dispergiermitteln, Antischaummitteln, Kopplungsmitteln, Stabilisierungsmitteln, Schmiermitteln, Flammschutzmitteln und Mischungen davon, ausgewählt ist, wobei das mindestens eine Additiv in Emulsionsform bereitgestellt wird, und
dass die Emulsion auf den Fasern durch Zugabe eines Mittels ausgefällt wird, das die Emulsion destabilisiert, bevor das Fasermaterial mit dem Polymermaterial vermischt wird.

2. Verfahren nach Anspruch 1, wobei das Verbundwerkstoffprodukt aus einer einzelnen Schicht besteht.

3. Verfahren nach Anspruch 1, wobei der hergestellte Verbundwerkstoff ein Multiplikationsprodukt ist.

4. Verfahren nach einem der Ansprüche 1 bis 3, wobei der Stoffauflauf mit Druck beaufschlagt ist.

5. Verfahren nach einem der Ansprüche 1 bis 4, wobei der Stoffauflauf mit Mitteln zum Erzeugen von Turbulenzen im Stoffauflauf ausgestattet ist, wie beispielsweise Schaufeln oder Rohre oder anderen festen Mitteln zum Erzeugen von Turbulenzen im Stoffauflauf.

6. Verfahren nach einem der Ansprüche 1 bis 5, wobei der Stoffauflauf mit einer Rühreinrichtung innerhalb des Stoffauflaufs oder einer Einrichtung zum Einleiten von Luft in den Stoffauflauf ausgestattet ist, um Turbulenzen zu erzeugen.

7. Verfahren nach einem der Ansprüche 1 bis 6, wobei das Verfahren einen weiteren Trocknungsschritt umfasst.

8. Verfahren nach einem der Ansprüche 1 bis 7, wobei das Verfahren einen weiteren Schritt des Pressens und des wahlweisen Erwärmens der Papierbahn nach dem Schritt des Bildens der Papierbahn in der Doppelsiebpresse umfasst.

9. Verfahren nach einem der Ansprüche 1 bis 8, wobei die natürlichen Fasern aus Holz gewonnene Fasern, botanische Fasern und/oder Derivate davon, gesponnene oder regenerierte Cellulose, mikrofibrillierte Cellulose (MFC), mikrofibrillierte Lignocellulosen (MLC), nanokristalline Cellulose (NCC) und/oder eine Mischung davon sind.

10. Verfahren nach einem der Ansprüche 1 bis 9, wobei die Naturfaser eine Cellulosefaser oder eine Lignocellulosefaser ist.

11. Verfahren nach einem der Ansprüche 1 bis 10, wobei das thermoplastische Material aus der Gruppe, umfassend Polyethylen, Polypropylen, Polymilchsäure, Polystyrol, Polycarbonat, Polyvinylchlorid, Acrylnitril-Butadien-Styrol, Ethylen-Vinylacetat, thermoplastische Elastomere und/oder Derivate und/oder Co-Polymere und/oder Mischungen davon, ausgewählt ist.

12. Verfahren nach einem der Ansprüche 1 bis 11, wobei der Gehalt an Polymermaterial 10 bis 80 Gew.-% des Trockengewichts der Suspension aus dem Fasermaterial und dem Polymermaterial beträgt.

## Revendications

1. Un procédé pour fabriquer un produit composite comprenant un matériau fibreux et un matériau polymère, dans lequel le matériau fibreux comprend des fibres naturelles, dans lequel le matériau polymère est un matériau thermoplastique, et dans lequel le produit composite est une feuille, formée par formation d'une bande humide, dans lequel ledit procédé comprend les étapes de ;
- mélange dudit matériau fibreux et dudit matériau polymère et d'un liquide pour former une suspension ;
- transport de ladite suspension vers une caisse de tête, dans lequel la consistance de la suspension dans la caisse de tête est de 2,0 à 10 % en poids ;
- formation d'une bande sur des toiles ;
- élimination du liquide de ladite bande, pour former ledit produit composite, dans lequel à la fois la formation et l'égouttage initial sont accomplis dans une presse à double toile, **caractérisé en ce que** le produit composite comprend en outre au moins un additif choisi dans le groupe de l'amidon, des charges, des agents tensioactifs, des agents de rétention, des agents de dispersion, des agents anti-mousse, des agents de couplage, des agents stabilisants, des lubrifiants, des retardateurs de flamme et des mélanges de ceux-ci, dans lequel l'au moins un additif est fourni sous forme d'émulsion, et
que l'émulsion est précipitée sur les fibres par l'ajout d'un agent qui déstabilise l'émulsion avant que ledit matériau fibreux soit mélangé avec ledit matériau polymère.

2. Le procédé selon la revendication 1, dans lequel le produit composite est constitué d'une seule couche.

3. Le procédé selon la revendication 1, dans lequel le composite produit est un produit de multiplication.

4. Le procédé selon l'une quelconque des revendications 1 à 3, dans lequel ladite caisse de tête est pressurisée.

5. Le procédé selon l'une quelconque des revendications 1 à 4, dans lequel ladite caisse de tête est équipée de moyens pour générer une turbulence dans la caisse de tête, tels que des aubes ou des tubes ou d'autres moyens fixes pour générer une turbulence dans la caisse de tête.

6. Le procédé selon l'une quelconque des revendications 1 à 5, dans lequel ladite caisse de tête est équipée de moyens d'agitation à l'intérieur de la caisse de tête ou de moyens pour introduire de l'air dans la caisse de tête pour créer une turbulence.

7. Le procédé selon l'une quelconque des revendications 1 à 6, dans lequel le procédé comprend une étape supplémentaire de séchage.

8. Le procédé selon l'une quelconque des revendications 1 à 7, dans lequel le procédé comprend une étape supplémentaire de pressage et facultativement de chauffage de ladite feuille après l'étape de formation de ladite feuille dans la presse à double toile.

9. Le procédé selon l'une quelconque des revendications 1 à 8, dans lequel lesdites fibres naturelles sont des fibres dérivées du bois, des fibres botaniques et/ou des dérivés de celles-ci, de la cellulose filée ou régénérée, de la cellulose microfibrillée (MFC), des lignocelluloses microfibrillées (MLC), de la cellulose nanocristalline (NCC) et/ou un mélange de celles-ci.

10. Le procédé selon l'une quelconque des revendications 1 à 9, dans lequel ladite fibre naturelle est une fibre de cellulose ou une fibre de lignocellulose.

11. Le procédé selon l'une quelconque des revendications 1 à 10, dans lequel ledit matériau thermoplastique est choisi dans le groupe comprenant le polyéthylène, le polypropylène, l'acide polylactique, le polystyrène, le polycarbonate, le polychlorure de vinyle, l'acrylonitrile-butadiène-styrène, l'éthylène-acétate de vinyle, les élastomères thermoplastiques et/ou leurs dérivés et/ou copolymères et/ou leurs mélanges.

12. Le procédé selon l'une quelconque des revendications 1 à 11, dans lequel la teneur en matériau polymère est de 10 à 80 % en poids du poids sec de la suspension dudit matériau fibreux et dudit matériau polymère.
